# EUROPÄISCHE PATENTANMELDUNG

(11) **EP 2 012 036 A2**
(43) Veröffentlichungstag der Anmeldung: **07.01.2009**
(21) Anmeldenummer: 08158544.0
(22) Anmeldetag: 19.06.2008
(51) Int. Cl.: F16D 23/06

(54) **Arretierung**

(30) Priorität: 05.07.2007 DE 102007031300
(71) Anmelder: Schaeffler KG, 91074 Herzogenaurach (DE)
(72) Erfinder: Scharf, Till, 72760, Reutlingen (DE); Spoerl, Marcus, 91126, Rednitzhembach (DE)

(57) **Zusammenfassung**

Die Erfindung betrifft eine Synchronisiereinrichtung (27) mit einer Arretierung (6) und einem Synchronkörper (1), wobei die Arretierung (6) ein Rastelement (8) und ein Gehäuse (14) aufweist und bezüglich des Synchronkörpers (1) axial verschiebbar ist und der Verschiebeweg durch eine einteilig mit der Arretierung (6) bzw. dem Synchronkörper (1) ausgebildete Verliersicherung begrenzt ist.

## Beschreibung

### Gebiet der Erfindung

Die Erfindung betrifft eine Synchronisiereinrichtung mit einer Arretierung und einem Synchronkörper, wobei die Arretierung ein Rastelement und ein Gehäuse aufweist und bezüglich des Synchronkörpers im verbauten Zustand axial verschiebbar ist.

### Hintergrund der Erfindung

In modernen handgeschalteten Getrieben werden Synchronisiereinrichtungen eingesetzt, um auf komfortable Art ein Schalten zwischen den einzelnen Gangstufen zu ermöglichen. Beim Schaltvorgang wird mittels verschiedener Elemente der Synchronisiereinrichtung die Umfangsgeschwindigkeit eines Gangrades der Umfangsgeschwindigkeit der Getriebewelle angepasst und dann eine formschlüssige Verbindung zwischen der Getriebewelle und dem Gangrad hergestellt. Der Synchronkörper ist ein wichtiges Bauelement der Synchronisiereinrichtung. Durch diesen sind die Getriebewelle und eine Schiebemuffe der Synchronisiereinrichtung drehfest miteinander verbunden. Dies erfolgt in der Regel dadurch, dass der Synchronkörper einerseits in Umfangsrichtung formschlüssig über ein an seiner Nabe ausgebildetes Verzahnungsprofil mit der Getriebewelle verbunden ist und andererseits über eine Außenverzahnung seines Muffenträgers die Schiebemuffe an seinem Außendurchmesser entlang der Längsmittelachse der Getriebewelle verschiebbar aufnimmt. Weiterhin dient der Synchronkörper je nach seiner Ausführung als Anschlags- und Führungselement für Synchron- bzw. Reibringe. Außerdem sind viele Synchronkörper mit in gleichmäßigen Abständen an seinem Außenumfang ausgearbeiteten Aufnahmen für Arretierungen wie Rastbolzen und Rastkugeln und für Druckstücke versehen. Die Arretierungen halten die Schiebemuffe in ihrer Mittelstellung, wenn kein Gangrad geschaltet ist. Dazu sind die Arretierungen unter Federvorspannung in eine Rastnut der Schiebemuffe gepresst, oder die Arretierung wirkt auf ein Druckstück, das wiederum in einer Rastnut der Schiebemuffe aufgenommen ist.

In einigen Synchronisiereinrichtungen dienen die in den Aufnahmen des Synchronkörpers angeordneten Druckstücke während eines Schaltvorganges zum Vorsynchronisieren, d.h. zur Bewegung eines jeweils zugeordneten Synchronrings gegen eine Reibfläche des benachbarten Kupplungskörpers oder Zwischenrings bei z. B. Doppelkonussynchronisierungen. Je nach Ausführung der Synchronisiereinheit wird das Druckstück entweder direkt bzw. durch eine oder mehrere Federn oder durch einen vorgespannten Rastbolzen in eine Rastnut der Schiebemuffe vorgespannt. Wird die Schiebemuffe zur Gangwahl axial bewegt, so wird über die innere Kontur ihrer Rastnut das Druckstück axial gegen einen Synchronring geschoben. Der Synchronring wird dadurch gegen die Reibfläche gepresst.

Die Aufnahmen für die Arretierungen müssen in der Regel durch spanabhebende Verfahren am Synchronkörper hergestellt werden. Dadurch wird der Synchronkörper geschwächt, so dass er an diesen Stellen eine verminderte Tragfähigkeit aufweist. In DE 10 2005 018 899 A1 sind eine Arretierung und ein Synchronkörper offenbart, bei denen der beanspruchte Raum für die Aufnahme minimiert ist. Nachteilig an der an sich vorteilhaften Paarung ist, dass die Arretierung während des Betriebes der Synchronisiereinheit nicht gegen ein axiales Herausfallen gesichert ist und zusätzlicher Sicherungen wie Ringfedern bedarf.

### Zusammenfassung der Erfindung

Die Aufgabe der Erfindung ist es daher, eine Synchronisiereinrichtung mit einer Arretierung und einem Synchronkörper für eine derartige Arretierung bereitzustellen, wobei der Synchronkörper und die Arretierung unaufwändig gegen eine relativ zueinander zu große axiale Verschiebung gesichert sind.

Diese Aufgabe ist nach dem Gegenstand des kennzeichnenden Teils des Anspruchs 1 dadurch gelöst, dass der relative Verschiebeweg zwischen dem Synchronkörper und der Arretierung durch eine einteilig mit dem Synchronkörper und der Arretierung ausgebildete Verliersicherung axial begrenzt ist. Eine separate Verliersicherung, beispielsweise in Form von einer oder mehreren Ringfedern, ist daher nicht erforderlich, was die Montage in einer Synchronisiereinrichtung erheblich vereinfacht und Kosten spart. Des Weiteren ist es nicht erforderlich, kompliziert geformte, häufig ringförmige Nuten zur Aufnahme des ringförmigen Sprengrings in den Synchronkörper einzubringen.

Die Arretierung und der Synchronkörper so angeordnet, dass sich die Arretierung von einer Mittelstellung aus ein- oder beidseitig verschieben lässt, nicht jedoch über ein bestimmtes Maß hinaus. Die erfindungsgemäße Verliersicherung kann beispielsweise dadurch gebildet sein, dass die Arretierung beim Einbau radial in den Synchronkörper eingesetzt wird und nachfolgend eine Schiebemuffe den Synchronkörper mit der Arretierung umgreift. Damit ist die Arretierung radial gesichert. Die erfindungsgemäße axiale Sicherung erfolgt durch Mittel des Synchronkörpers, die einen Anschlag für ein Führungselement, beispielsweise einen Mitnehmer oder aber auch das Gehäuse selbst, des Arretierelements bilden.

Der Synchronkörper ist im wesentlichen scheibenförmig ausgebildet und weist eine Außenverzahnung auf. Es können zusätzlich außenseitig Aufnahmen angeordnet sein, in welche die Arretierungen eingesetzt sind. Die Aufnahmen sind beispielsweise im Querschnitt T-förmig oder rechteckig. Alternativ besteht der Synchronkörper aus einer massiven Scheibe, die außenseitig mit Verzahnungssegmenten aus Blech versehen ist und zwischen diesen Lücken aufweist, in denen die Arretierungen angeordnet sind. Die zweite Ausführungsform ist besonders geeignet für flache Arretierungen, die nicht oder kaum höher als die Verzahnung des Synchronkörpers bauen.

In einer Ausführungsform ist die Verliersicherung durch mindestens eine radial nach außen gerichtete Nut im Synchronkörper gebildet, wobei das Führungselement der Arretierung, das durch einen Lappen gebildet sein kann, mit der Nut im Eingriff steht. Wird die Arretierung bezüglich des Synchronkörpers axial verschoben, so gleitet der Lappen in der Nut. Ferner weist die Nut eine Wand auf, welche für den Lappen einen Anschlag darstellt, so dass der Verschiebeweg axial begrenzt ist. In bevorzugter Weise ist der Anschlag endseitig angeordnet, so dass er axial nicht hervorsteht und gleichzeitig einen maximalen Verschiebeweg zulässt. Die Verliersicherung kann auch durch mehrere derartige Paarungen von Nuten mit Anschlägen und Führungselementen gebildet sein.

Es ist nicht erforderlich, dass der Anschlag zum Nutgrund einen rechten Winkel bildet, vielmehr kann eine axiale Verschiebung durch ein entsprechendes Profil des Nutgrundes lediglich erschwert werden. Dies ist besonders vorteilhaft, wenn ein entsprechendes Profil auch mittels spanloser Umformtechnik erzeugt werden kann.

In einem Ausführungsbeispiel ist der Anschlag derart angeordnet, dass die Nut axial einseitig geöffnet ist. Diese Variante eignet sich für den Fall, dass lediglich ein Gangrad mit dem Synchronkörper zusammen wirkt, so dass die Arretierung auch nur einseitig gesichert werden muss. Ist die Schiebemuffe beidseitig auf zwei Gangräder verschiebbar, so können beispielsweise zwei endseitig angeordnete Wände die Nut begrenzen. Alternativ dazu wird erfindungsgemäß vorgeschlagen, zwei Nuten mit jeweils einem Anschlag vorzusehen, wobei die begrenzenden Anschläge jeweils auf axial verschiedenen Seiten angeordnet sind. In besonders vorteilhafter Weise verläuft die Nut in axialer Richtung, weil die Arretierung ebenfalls axial verschoben wird.

In einem weiteren Ausführungsbeispiel ist die Arretierung in einer Aufnahme angeordnet, so dass sie in Umfangsrichtung durch die Verzahnung eingefasst ist. Das Führungselement der Arretierung greift in eine Nut ein, wobei die Nut im Bereich der Aufnahme angeordnet ist, so dass die Nut im montierten Zustand durch die Arretierung verdeckt ist.

Die erfindungsgemäße Arretierung weist ein Rastelement auf und ein Gehäuse, in dem das Rastelement angeordnet ist. Die Arretierung weist zumindest ein Führungselement auf, welcher in Druckrichtung des Rastelements, also radial, orientiert ist. In besonders vorteilhafter Weise ist das Führungselement einteilig mit dem Gehäuse der Arretierung ausgebildet. Wird das Gehäuse durch spanlose Umformtechnik hergestellt, so kann das Führungselement beim Herstellungsprozess einfach durch Abwinkeln eines Lappens aus dem Gehäuse erzeugt werden. Alternativ dazu lässt sich das Führungselement formschlüssig oder stoffschlüssig mit dem Gehäuse verbinden. Ist das Rastelement aus Kunststoff, so kann das Führungselement einteilig mit dem Gehäuse durch einen Spritzvorgang hergestellt werden. Um ein Verkippen zu verringern, ist es vorteilhaft, das oder die Führungselemente symmetrisch anzuordnen. Genau ein Führungselement sollte beim verbauten Arretierelement in Umfangsrichtung etwa mittig angeordnet sein.

Die Erfindung umfasst ebenfalls Arretierelemente, welche mehrere Führungselemente aufweisen, die im verbauten Zustand der Arretierung axial aufeinander folgend angeordnet sind sowie Arretierungen, bei denen die Führungselemente axial versetzt angeordnet sind. Im zweiten Fall greifen die Führungselemente in unterschiedliche Nuten ein. In beiden Fällen jedoch sind die Nuten im Synchronkörper im Bereich der Aufnahme angeordnet.

Die Führungselemente können auch als weitere Funktion eine Mittenzentrierung erfüllen. In diesem Fall ragen die Führungselemente axial gesehen in der Neutralstellung über die Breite des Synchronkörpers hinaus. Weiterhin ist ihre radiale Ausdehnung größer als die Tiefe der Nut bzw. einer Anschlagskontur in der Nut, in welche sie bei axialer Verschiebung eingreifen. Wird die Arretierung axial verschoben, so schlägt zunächst das Führungselement als Zentrierelement am Nutgrund, der einen Zentrieranschlag bildet, an. Unterscheiden sich Nuttiefe und Länge des Führungselements nur um einen geringen Betrag, so lässt sich durch einen erhöhten Kraftaufwand die Arretierung axial weiter verschieben. Dieser Widerstand ist so einzustellen, dass einerseits die axiale Verschiebung der Arretierung keinen großen Kraftaufwand erfordert, andererseits sollte die Arretierung in der Neutralstellung sicher gehalten werden, so dass Vibrationen und eventuelle kleinere Stöße die Arretierung nicht verschieben. Die Verschiebung kann erleichtert werden, indem der Nutgrund nicht eben ausgebildet ist, sondern zu den axialen Seiten hin leicht abfällt.

Es ist auch möglich, den Synchronkörper mit einem Führungselement zu versehen, das in eine entsprechende Nut einer Arretierung eingreift, für den Fall, dass die Arretierung mit der Schiebemuffe verbunden ist. Die einzelnen Weiterbildungen können auch miteinander kombiniert werden.

Eine weitere Ausführungsform stellt ein Synchronkörper dar, der außenseitig in der Außenverzahnung oder in seiner Außenverzahnung und seinem Grundkörper eine Lücke aufweist. Seitlich in die Lücke ragen Nasen, die den Anschlag bilden. Die Nasen können einteilig mit der Außenverzahnung ausgebildet sein, was besonders einfach herstellbar ist, wenn es sich um eine Blechverzahnung handelt und ein entsprechender Blechstreifen gestanzt wird. Des Weiteren sollten die Nasen in Umfangsrichtung und wenn möglich diagonal versetzt in die Lücke weisen, damit gleichzeitig der Verschiebeweg der Arretierung nicht unnötig verkürzt wird. Gegen die Nasen schlägt dann das Gehäuse der Arretierung an. Je nach Ausbildung der Arretierung können die Nasen auch abgewinkelt sein.

### Kurze Beschreibung der Zeichnungen

Die Erfindung ist nachfolgend anhand von Ausführungsbeispielen näher erläutert. Es zeigen:
- Figur 1: eine Synchronisiereinrichtung gemäß dem Stand der Technik,
- Figur 2: eine Schrägansicht der Erfindung mit einer Arretierung in einem Synchronkörper,
- Figur 3: eine Schrägansicht des Synchronkörpers nach Figur 2,
- Figur 4: eine vergrößerte perspektivische Ansicht der Arretierung nach Figur 2,
- Figur 5: eine rückseitige, perspektivische Ansicht der Arretierung gemäß Figur 2,
- Figur 6: einen weiteren erfindungsgemäßen Synchronkörper,
- Figuren 7-9: jeweils einen Längs- bzw. Querschnitt von drei erfindungsgemäßen Synchronkörpern im Bereich der Nuten,
- Figur 10: eine Schrägansicht einer weiteren Ausführungsform der Erfindung mit einer Arretierung in einem Synchronkörper.

### Detaillierte Beschreibung der Zeichnungen

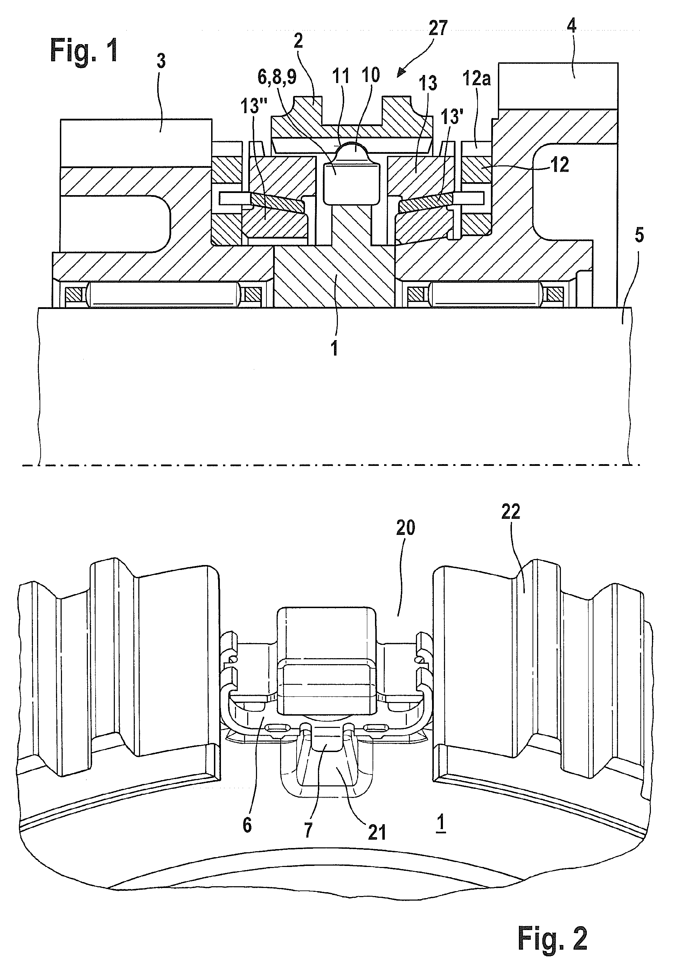

Figur 1 zeigt eine Synchronisiereinrichtung 27 mit einem Synchronkörper 1 und einer Schiebemuffe 2 zum wahlweisen Kuppeln von Gangrädern 3 und 4. Die Gangräder 3 und 4 sind drehbar, aber längs fest auf einer Schaltwelle 5 gelagert. Der Synchronkörper 1 sitzt verdrehfest sowie längs fest auf der Schaltwelle 5 und trägt auf seinem Außenumfang die Schiebemuffe 2. Die Schiebemuffe 2 ist mittels einer Verzahnung drehfest zu dem Synchronkörper 1 und damit zur Schaltwelle 5 wahlweise in Richtung eines der Gangräder 3 oder 4 verschiebbar auf dem Synchronkörper 1 angeordnet. An jeder Seite des Synchronkörpers 1 ist längs zwischen diesem und dem Gangrad 3, 4 jeweils ein Satz Synchronringe angeordnet.

Der Synchronkörper 1 nimmt an seinem Umfang mehrere Arretierungen 6 auf, wobei eine Arretierung 6 hier nur schematisch dargestellt und in den nachfolgenden Figuren detaillierter beschrieben ist. Die Arretierung 6 ist als ein Druckstück 9 ausgelegt und verrastet mit ihrem Rastelement 8 an der Schiebemuffe 2 in ihrer neutralen Stellposition. In der neutralen Stellposition stützt sich die Arretierung 6 an dem Synchronkörper 1 radial ab und spannt mit einem Deckel 10 gegen die Schiebemuffe 2 vor. Dabei greift das Rastelement 8 mit seinem Deckel 10 in eine Rastvertiefung 11 ein.

Wird die Schiebemuffe 2 axial verschoben, greift sie in eine Kupplungsverzahnung 12a einer mit dem Gangrad 4 fest verbundenen Kupplungsscheibe 12 ein. Die Schaltwelle 5 ist über den Synchronkörper 1 und die Schiebemuffe 2 mit dem Gangrad 4 drehfest verbunden, wobei der dem Gangrad 4 zugeordnete Gang geschaltet ist. Bei der Schaltbewegung der Schiebemuffe 2 in die geschaltete Position nimmt die Schiebemuffe 2 das in die Rastvertiefung 11 eingreifende Rastelement 8 der Arretierung 6 längs mit und verschiebt es gegen den äußeren Synchronring 13. Damit ist der Prozess der Vorsynchronisation eingeleitet.

Die weiter in Richtung der Kupplungsverzahnung 12a bewegte Schiebemuffe 2 zwingt den Deckel 10 des sich an dem äußeren Synchronring 13 abstützenden Druckstücks 9 aus der Rastvertiefung 11. Der Deckel 10 federt dabei radial ein. Beim Lösen des Ganges bewegt sich die Schiebemuffe 2 aus dieser Stellung zurück. Dabei greift der mit Vorspannung an der Schiebemuffe 2 anliegende Deckel 10 erneut in die Rastvertiefung 11 ein.

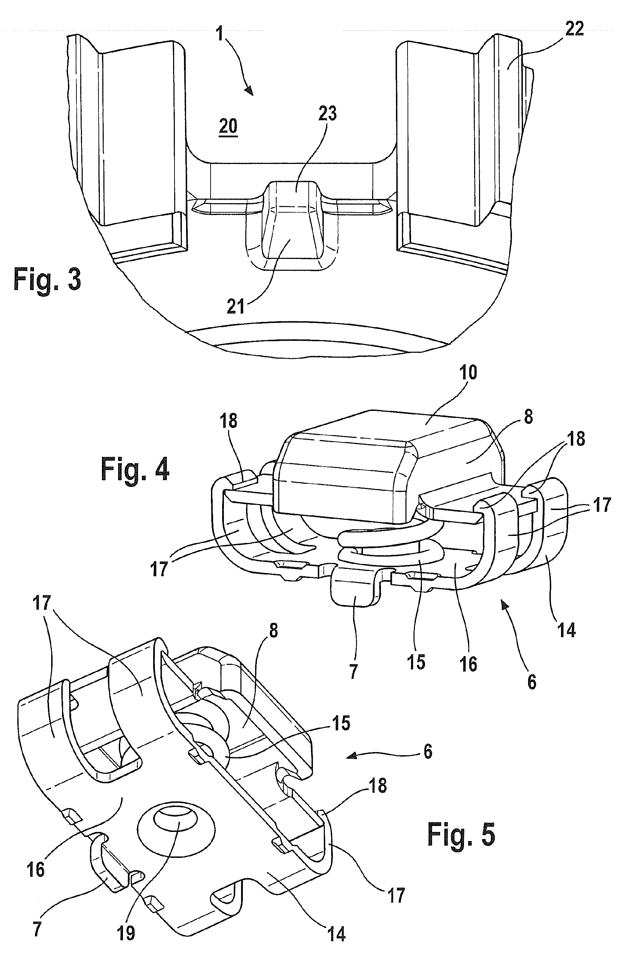

Figuren 4 und 5 zeigen die Arretierung 6. Die Arretierung 6 besteht aus einem Gehäuse 14 und einem Rastelement 8. Das Rastelement 8 weist einen Deckel 10 auf, welcher gegenüber dem Gehäuse 14 durch ein Federelement 15 vorgespannt ist. Das Gehäuse 14 ist im wesentlichen wannenförmig ausgebildet. Es weist neben einem Boden 16 von diesem abgewinkelte Halterungen 17 auf, welche über Vorsprünge 18 den Deckel 10 innerhalb des Gehäuses 14 fixieren. Im unbelasteten Zustand ist die Federkraft so groß, dass sie den Deckel 10 gegen die Vorsprünge 18 presst, so dass der Deckel 10 sicher in dem Gehäuse 14 gehalten ist. Der Boden 16 weist mittig einen durchgestellten hohlen Ansatz 19 auf, der als Dornfortsatz das Federelement 15 sicher führt, so dass es nicht verkippen kann. Die Arretierung 6 weist ferner Führungselemente 7, 7' auf, welche in nahezu rechtem Winkel von dem Boden 16 abgewinkelt sind.

Die Figuren 2 und 3 zeigen jeweils einen Ausschnitt eines erfindungsgemäßen Synchronkörpers 1, dessen Außenverzahnung 22 durch eine Aufnahme 20 unterbrochen ist, wobei in der Aufnahme 20 für die Arretierung 6 eine Nut 21 angeordnet ist. Die Nut 21 ist axial einseitig geöffnet (in den Figuren nach vorn orientiert). Auf der axial gegenüberliegenden Seite wird sie endseitig durch einen Anschlag 23 in Form einer Wand verschlossen. Gemäß Figur 2 ist in der Synchronisiereinrichtung 27 die Arretierung 6 so in dem Synchronkörper 1 angeordnet, dass das Führungselement 7 in die Nut 21 eingreift.

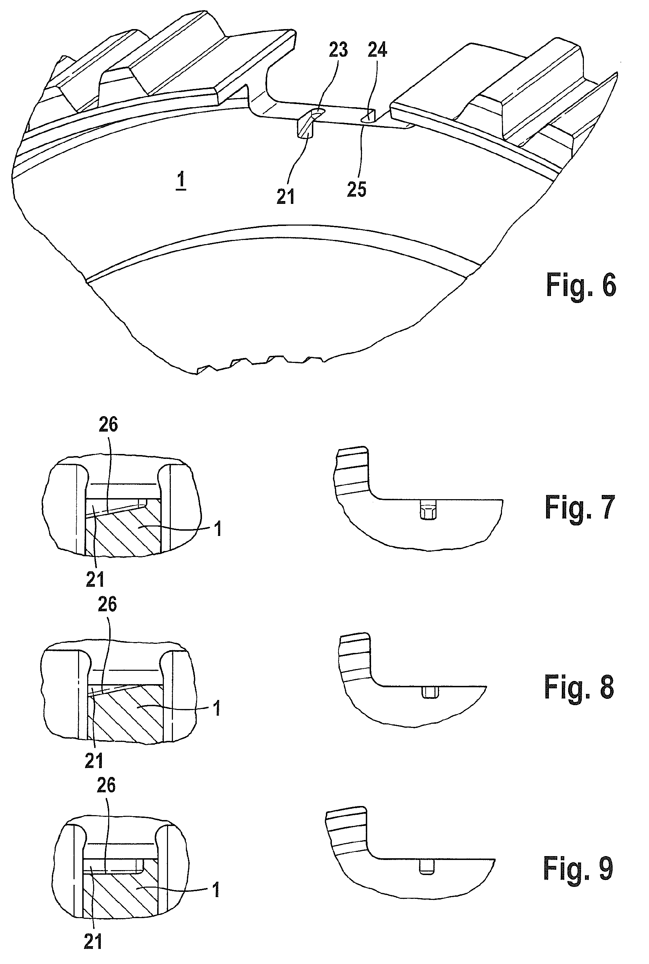

Figur 6 zeigt einen Synchronkörper 1, der zwei Nuten 21, 24 aufweist. Die erste Nut 21 und die zweite Nut 24 sind axial zu verschiedenen Seiten durch einen ersten Anschlag 23 bzw. einen zweiten Anschlag 25 verschlossen. Eine radial in diesem Synchronkörper 1 eingesetzte Arretierung 6 mit zwei Führungselementen 7, 7', welche jeweils in eine Nut 21, 14 eingreifen und damit versetzt an der Arretierung angeordnet sind, lässt sich in beide Richtungen axial verschieben. Sie wird jedoch durch zwei zueinander versetzt angeordnete Anschläge 23, 25 in ihrem Verschiebeweg begrenzt.

Die Nuten 21,24 weisen einen Nutgrund 26 auf, dessen Beschaffenheit der jeweiligen Anwendung anpassbar ist. So ist in Figur 9 vorgesehen, dass der Nutgrund 26 eben ist, wodurch das Führungselement 7, sofern es den Nutgrund 26 nicht berührt, keiner zusätzlichen Kraft ausgesetzt ist, so dass die Arretierung 6 besonders leicht verschiebbar ist. Der Nutgrund 26 kann auch die Form eines Rastgebirges aufweisen.

In den Varianten nach den Figuren 7 und 8 ist der Nutgrund 26 zur Mitte des Synchronkörpers 1 hin jeweils ansteigend und im Querschnitt konvex. Wird in diesem Fall eine Arretierung aus der Neutralstellung axial verschoben, so trifft das in die Nut 21 eingreifende Führungselement 7 auf den Nutgrund 26, so dass ein weiteres Verschieben nur durch Überwindung eines gewissen Widerstandes möglich ist. Dieser Effekt tritt bei einem Synchronkörper 1 gemäß Figur 6 in beiden Richtungen auf. Ist die Arretierung 6 in Neutralstellung, so reichen beispielsweise durch Vibrationen eingebrachte Kräfte nicht aus, die Arretierung 6 vollständig zu verschieben. Ein unerwünschtes Ansynchronisieren wird somit vermieden. Erst die durch den Bediener oder einen Motor aufgebrachte Kraft kann die Arretierung 6 vollständig in die Position verschieben, in der der zugeordnete Gang geschaltet ist.

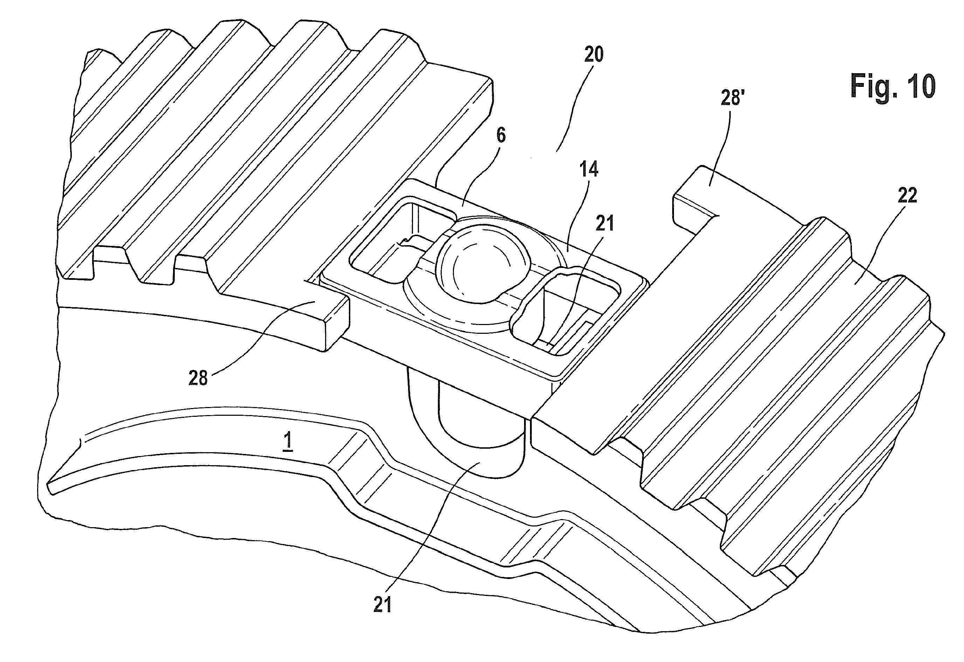

Figur 10 zeigt eine T-förmige Arretierung 6, welche in einen Synchronkörper 1 eingesetzt ist. Die Arretierung 6 ist axial verschiebbar, bis sie mit ihrem Gehäuse 14 an eine der Nasen 28, 28' anschlagen. Die Nasen 28, 28' sind Verlängerungen des Grundbandes, aus dem die Außenverzahnung 22 des Synchronkörpers 1 hergestellt ist. Sie weisen daher dessen Dicke auf. Die Außenverzahnung 22 des Synchronkörpers und die Nut 21, in der die Arretierung 6 gleitet, stellen sicher, dass lediglich eine Bewegung in axialer Richtung erfolgt, so dass ein Verkippen nicht möglich ist. Die Nasen 28, 28' sind asymmetrisch angeordnet, so dass sie sich diagonal gegenüberliegen und einen möglichst großen Verschiebeweg zulassen.

### Bezugszahlenliste

- 1: Synchronkörper
- 2: Schiebemuffe
- 3: Gangrad
- 4: Gangrad
- 5: Schaltwelle
- 6: Arretierung
- 7,7': Führungselement
- 8: Rastelement
- 9: Druckstück
- 10: Deckel
- 11: Rastvertiefung
- 12: Kupplungsscheibe
- 12a: Kupplungsverzahnung
- 13, 13': Synchronring
- 13": Synchronring
- 14: Gehäuse
- 15: Federelement
- 16: Boden
- 17: Halterung
- 18: Vorsprung
- 19: Ansatz
- 20: Aufnahme
- 21: erste Nut
- 22: Außenverzahnung
- 23: erster Anschlag
- 24: zweite Nut
- 25: zweiter Anschlag
- 26: Nutgrund
- 27: Synchronisiereinrichtung
- 28,28': Nasen

## Patentansprüche

1. Synchronisiereinrichtung (27) mit einem Synchronkörper (1) und mindestens einer Arretierung (6), wobei die Arretierung (6) ein Rastelement (8) und ein Gehäuse (14) aufweist und bezüglich des Synchronkörpers (1) axial verschiebbar ist, **dadurch gekennzeichnet, dass** der Verschiebeweg durch eine Verliersicherung begrenzt ist, wobei die Verliersicherung als ein mit dem Synchronkörper verbundener Anschlag (23) ausgebildet ist, der die axiale Verschiebbarkeit der Arretierung (6) begrenzt.

2. Synchronisiereinrichtung nach Anspruch 1, **dadurch gekennzeichnet, dass** die Verliersicherung durch mindestens eine radial nach außen gerichtete Nut (21) im Synchronkörper (1) gebildet ist, wobei in der Nut (21) ein Anschlag (23) angeordnet ist, und ein Teil der Arretierung (6) mit der Nut (21) im Eingriff ist.

3. Arretierung (6) für einen Synchronkörper (1) einer Synchronisiereinrichtung (27), wobei die Arretierung (6) ein Rastelement (8) und ein Gehäuse (14) aufweist und bezüglich des Synchronkörpers (1) axial verschiebbar ist, **dadurch gekennzeichnet, dass** die Arretierung (6) zumindest ein Führungselement (7) aufweist, welches mit einem Anschlag (23) des Synchronkörpers (1) derart zusammenwirkt, dass es eine axiale Verliersicherung bildet.

4. Arretierung nach Anspruch 3, **dadurch gekennzeichnet, dass** das Führungselement (7) einteilig mit dem Gehäuse (14) der Arretierung (6) ausgebildet ist.

5. Arretierung nach Anspruch 3, **dadurch gekennzeichnet, dass** das Führungselement (7) als ein Lappen aus Blech ausgebildet ist.

6. Arretierung nach Anspruch 3, **dadurch gekennzeichnet, dass** das Gehäuse (14) der Arretierung (6) einen Boden (16) aufweist, wobei das Führungselement (7) aus dem Boden (16) durch spanlose Umformtechnik geformt ist und von diesem abgewinkelt und in Druckrichtung des Rastelements (8) orientiert ist.

7. Arretierung nach Anspruch 3, **dadurch gekennzeichnet, dass** die Arretierung (6) zwei Führungselemente (7, 7') aufweist, welche an gegenüberliegenden Enden des Bodens (16) angeordnet sind.

8. Arretierung nach Anspruch 3, **dadurch gekennzeichnet, dass** die Führungselemente (7, 7') in Axialrichtung gesehen zueinander versetzt angeordnet sind.

9. Arretierung nach Anspruch 3, **dadurch gekennzeichnet, dass** das Führungselement (7) als Zentrierelement in der Neutralstellung an einem Zentrieranschlag anliegt, wobei der Zentrieranschlag eine Rastposition für das Führungselement (7) bildet.

10. Synchronkörper einer Vorrichtung nach Anspruch 1, **dadurch gekennzeichnet, dass** der Synchronkörper (1) außenseitig Aufnahmen (20) für die Arretierungen (6) aufweist.

11. Synchronkörper einer Vorrichtung nach Anspruch 2, **dadurch gekennzeichnet, dass** der Anschlag (23) endseitig angeordnet ist, so dass die Nut (21) axial einseitig geöffnet ist.

12. Synchronkörper einer Vorrichtung nach Anspruch 11, **dadurch gekennzeichnet, dass** die Nut (21) in axialer Richtung verläuft.

13. Synchronkörper nach Anspruch 11, **dadurch gekennzeichnet, dass** die Aufnahme (20) zumindest umfangsseitig von einer Außenverzahnung (22) umschlossen ist und dass die Nut (21) im Bereich der Aufnahme (20) angeordnet ist.

14. Synchronkörper nach Anspruch 12, **dadurch gekennzeichnet, dass** der Synchronkörper (1) zwei Nuten (21, 24) aufweist, in denen jeweils ein Anschlag (23, 25) angeordnet ist, wobei die Anschläge (23, 25) auf axial gegenüberliegenden Seiten des Synchronkörpers (1) angeordnet sind.

15. Synchronkörper nach Anspruch 11, **dadurch gekennzeichnet, dass** die Nut (21) einen konvexen Querschnitt aufweist.

16. Synchronkörper nach Anspruch 11, **dadurch gekennzeichnet, dass** die Nut (21) im Längsschnitt gesehen eine veränderliche Tiefe aufweist.

17. Synchronkörper nach Anspruch 10, **dadurch gekennzeichnet, dass** die Aufnahme (20) als eine Lücke in der Außenverzahnung (22) gebildet ist und die Außenverzahnung (22) eine oder mehrere Nasen (28, 28') aufweist, welche in die Lücke ragen.
